# EUROPEAN PATENT APPLICATION

(11) **EP 4 834 458 A1**
(43) Date of publication of application: **04.11.2026**
(21) Application number: 26175893.2
(22) Date of filing: 30.04.2026
(51) Int. Cl.: B01D 45/12, B01D 45/18, B05B 14/45

(54) **PAINT MIST RECOVERY APPARATUS**

(30) Priority: 02.05.2025 JP 2025076958
(71) Applicant: TAIKISHA LTD., Tokyo 160-6129 (JP)
(72) Inventor: HORISAWA, Satoshi, TOKYO (JP); IWAKIRI, Hiroshi, TOKYO (JP); MIWA, Tomotaka, TOKYO (JP); SEKIGAWA, Takuya, TOKYO (JP); AKAOGI, Ryuto, TOKYO (JP)
(74) Representative: EP&C

(57) **Abstract**

There is provided a paint mist recovery apparatus including: a housing having an opening through which untreated air containing paint mist is introduced; cyclone separators that separate the paint mist from the untreated air and that are provided in the housing; and a recovery box that recovers the paint mist separated by the cyclone separators and that communicates with the cyclone separators, in which air cleaned by the cyclone separators passes through a gap between the housing and the cyclone separators and is exhausted through a lower surface of the housing or a side surface of the housing.

## Description

### BACKGROUND

### Technical Field

The present disclosure relates to a paint mist recovery apparatus.

### Related Art

Japanese Patent (JP-B) No. 7270326 discloses a paint mist collecting apparatus configured by arranging and inserting horizontal plates and vertical plates having openings and slits into each other.

### SUMMARY

However, in the conventional example, it is considered that, for example, a powdery mist having no viscosity is not collected and exits to a downstream side.

An object of the disclosure is to enhance recovery efficiency of paint mist having no viscosity.

A paint mist recovery apparatus according to the disclosure includes: a housing having an opening through which untreated air containing paint mist is introduced; cyclone separators that separate the paint mist from the untreated air and that are provided in the housing; and a recovery box that recovers the paint mist separated by the cyclone separators and that communicates with the cyclone separators. Air cleaned by the cyclone separators passes through a gap between the housing and the cyclone separators and is exhausted through a lower surface of the housing or a side surface of the housing.

In the paint mist recovery apparatus, the cyclone separators are provided in the housing, and an opening for sucking untreated air containing paint mist is provided in the housing. Air containing paint mist flows into the cyclone separators, and a swirling flow of the air is generated. The paint mist moves toward a wall surface of an outer cylinder by a centrifugal force of the swirling flow and comes into contact with the wall surface. At this time, the paint mist having no viscosity does not adhere to the wall surface of the cyclone separator, but moves to a downstream side (vertically downward) of the swirling flow, and is recovered in the recovery box. Air from which the paint mist has been separated is discharged upward at a center of the cyclone separator, passes through a gap between the housing and the cyclone separators, and is discharged as cleaned air to the outside of the housing.

According to the disclosure, recovery efficiency of paint mist having no viscosity can be enhanced.

### BRIEF DESCRIPTION OF THE DRAWINGS

Exemplary embodiments of the present invention will be described in detail based on the following figures, wherein:
Fig. 1 is a perspective view illustrating a paint mist recovery apparatus according to Embodiment 1.
Fig. 2 is a cross-sectional view illustrating a cyclone separator and a front view illustrating a suction port in the paint mist recovery apparatus according to Embodiment 1.
Fig. 3 is an exploded perspective view illustrating the paint mist recovery apparatus according to Embodiment 1.
Figs. 4(A) to 4(D) are perspective views illustrating a flow from inflow to discharge of air in the paint mist recovery apparatus according to Embodiment 1.
Fig. 5 is a cross-sectional view illustrating centrifugal separation and recovery of paint mist and a discharge path of air in the paint mist recovery apparatus according to Embodiment 1.
Fig. 6 is a perspective view illustrating a state in which the paint mist recovery apparatus according to Embodiment 1 is mounted in a movable module.
Fig. 7 is a perspective view illustrating a state in which a side surface is open in a paint mist recovery apparatus according to Embodiment 2.
Fig. 8 is a cross-sectional view illustrating a paint mist recovery apparatus according to Embodiment 3 in which a lower portion of an outer cylinder of the cyclone separator has a conical shape with a diameter decreasing downward.
Fig. 9 is a perspective view illustrating a paint mist recovery apparatus having a configuration in which one recovery box performs recovery according to Embodiment 4.

### DETAILED DESCRIPTION

Hereinafter, embodiments of the disclosure will be described based on the figures. Components denoted by the same reference numerals in the individual figures mean to indicate the same or similar components. Redundant descriptions and reference numerals in the embodiments to be described below may be omitted. The figures used in the following description are all schematic, and dimensional relationships between individual components, ratios between individual components, and the like illustrated in the figures are not necessarily the same as actual ones. Dimensional relationships between individual components, ratios between individual components, and the like are also not necessarily the same among the plurality of figures.

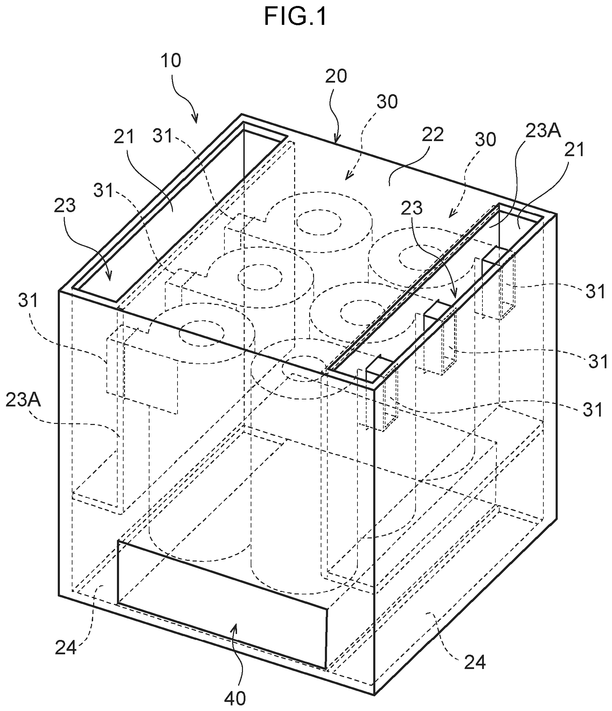

In Figs. 1 to 5, a paint mist recovery apparatus 10 according to the embodiment includes a housing 20, a cyclone separator 30, and a recovery box 40.

The housing 20 is formed in, for example, a substantially cubic shape, and a top surface 22 has openings 21 through which untreated air containing paint mist is introduced, for example. The openings 21 are formed in a rectangular shape along a pair of opposite sides of the top surface 22, respectively. The untreated air is discharged from a paint booth and sent to the paint mist recovery apparatus 10.

A suction space 23 is formed under the opening 21 inside the housing 20. In order to secure an exhaust flow path to an exhaust port 24 formed in a lower surface of the housing 20, a depth of the suction space 23 is set to be smaller than the entire height of the housing 20.

An inner wall 23A of the suction space 23 has openings 25 in which respective suction ports 31 of the cyclone separators 30 are located. In the embodiment, six cyclone separators 30 are provided in the housing 20, and three openings 25 are formed in the suction space 23 on one side.

The housing 20 is made of, for example, only cardboard, only an incombustible material, or any combination of cardboard and an incombustible material. For example, iron can be used as the incombustible material. For example, the six cyclone separators 30 are provided in the housing 20 and are centrifugal separators that separate paint mist 12 from untreated air.

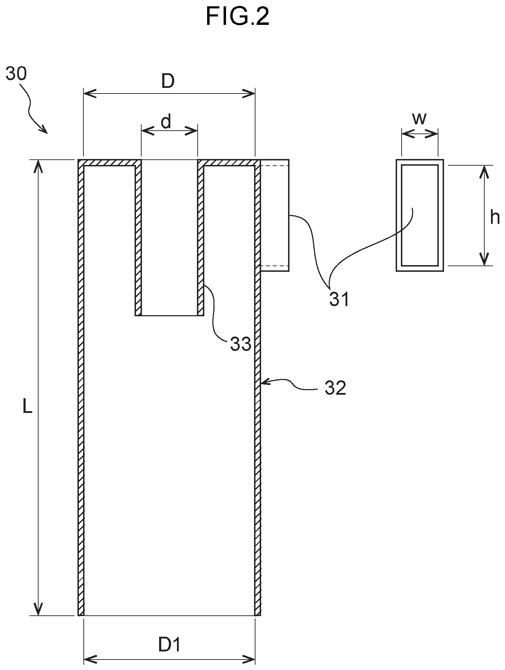

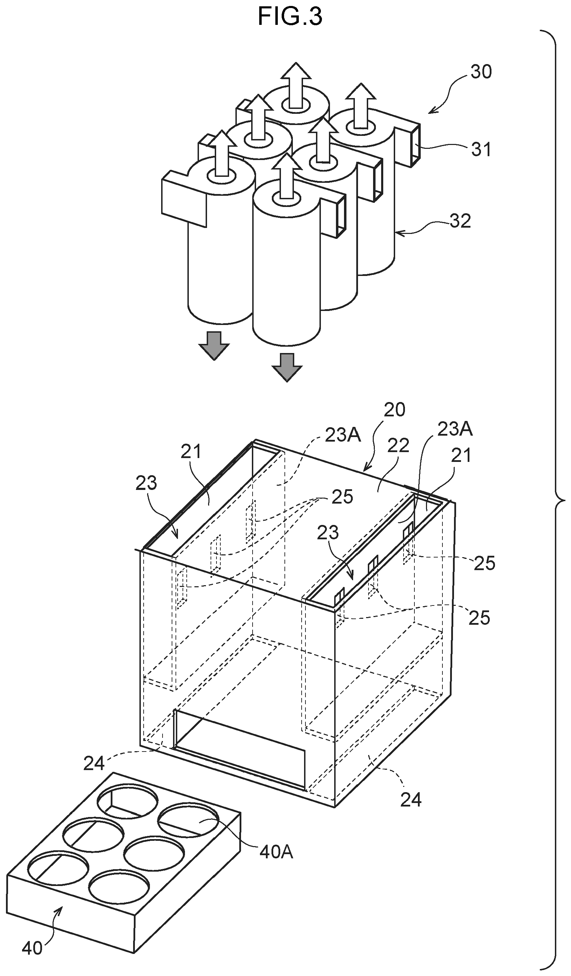

As illustrated in Fig. 2, the cyclone separator 30 includes, for example, an outer cylinder 32 and an exhaust pipe 33. The outer cylinder 32 has a circular cylindrical shape. In an example illustrated in Figs. 3, 4, and 5, the recovery box 40 has holes 40A corresponding to respective lower ends of the outer cylinders 32. A shaded arrow in Fig. 3 represents a discharge direction of the paint mist separated by the cyclone separator 30. A white arrow in Fig. 3 represents a discharge direction of cleaned air from the exhaust pipe 33.

For example, a total of six cyclone separators 30 in 3×2 rows are arrayed. The suction port 31 is provided substantially tangentially to an upper portion of the outer cylinder 32. Three suction ports 31 are provided for one side of the six cyclone separators 30, and the suction ports 31 are inserted into the three openings 25 of the inner wall 23A of the suction space 23, respectively, for example. Consequently, the cyclone separators 30 are held by the housing 20. Another part of the cyclone separator 30 may be further held by the housing 20 or the like.

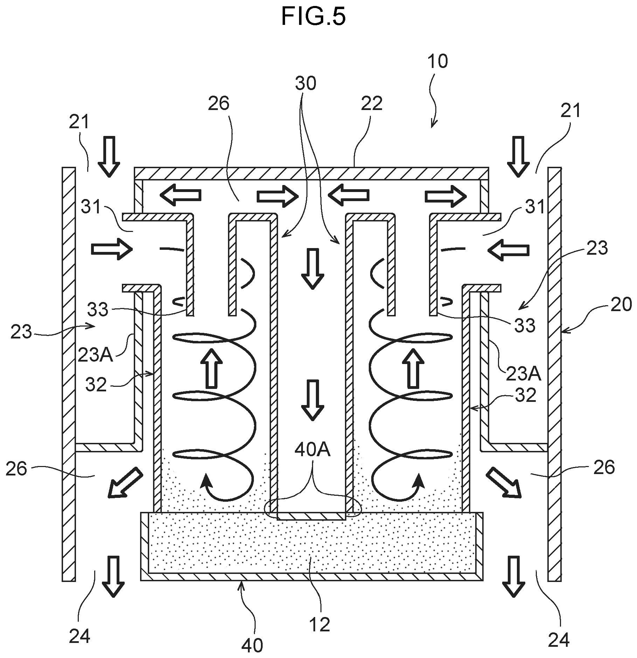

The exhaust pipe 33 is provided, for example, concentrically to the outer cylinder 32 at an inner side of the outer cylinder 32. An upper end of the exhaust pipe 33 is open inside the housing 20, specifically, in a gap 26 between the top surface 22 and the cyclone separators 30 as illustrated in Fig. 5.

The gap 26 is also formed between the adjacent outer cylinders 32 and between the outer cylinders 32 and the inner wall 23A. The gap 26 also serves as the exhaust flow path and communicates with the exhaust port 24 formed in the lower surface of the housing 20. The air cleaned by the cyclone separators 30 passes through the gap 26 between the housing 20 and the cyclone separators 30, and is exhausted from the exhaust port 24.

Here, dimensions of a general configuration of the cyclone separator 30 are illustrated. The paint mist is not sufficiently separated when an inlet flow speed of the cyclone separator 30 is slow, and scattering of the mist or decrease in suction force due to a pressure loss is caused when the inlet flow speed is too fast, and the separation efficiency decreases. A flow speed of from 8 to 12 m/s is suitable as a flow speed at the suction port 31 for separation of the paint mist that is a current target. When a flow speed of the air discharged from the exhaust pipe 33 is about 1.25 times as high as the flow speed at the suction port 31, favorable separation efficiency is obtained.

In Fig. 2, when a height dimension of the suction port 31 is represented by h, and a width dimension of the suction port 31 is represented by w, an inner diameter d of the exhaust pipe 33 of the cyclone separator 30 is obtained from (h × w)^{1/2}. When an inner diameter of the outer cylinder 32 of the cyclone separator 30 is represented by D, D ≈ from 2d to 2.5d.

When a length of the outer cylinder is represented by L, L ≈ from 3D to 4D.

The recovery box 40 is a container that recovers the paint mist 12 separated by the cyclone separators 30 and communicates with the cyclone separators 30. In Fig. 1, the recovery box 40 is configured to be drawn laterally from the housing 20.

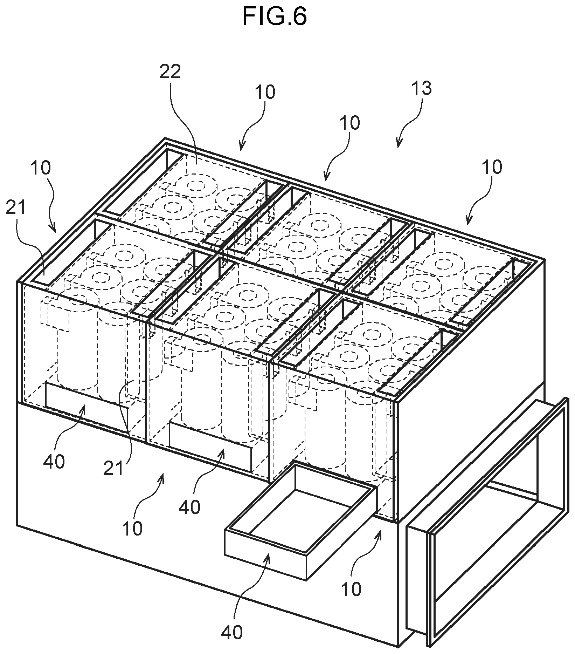

As illustrated in Fig. 6, the paint mist recovery apparatus 10 can be applied to a movable module 13 of a cardboard filter type dry booth installed in a paint booth.

### (Operations)

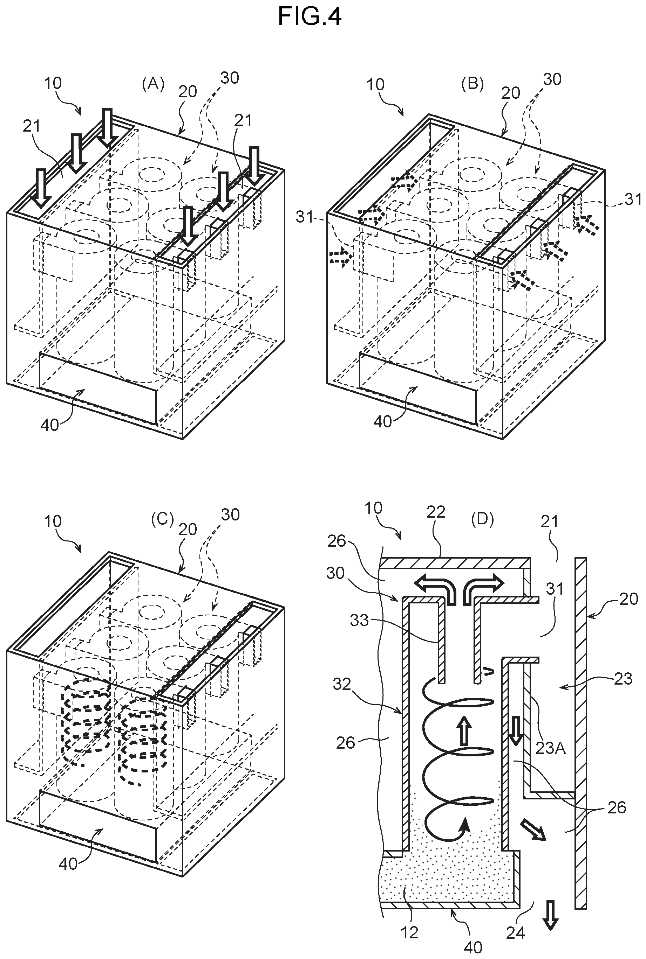

The embodiment is configured as described above, and operations thereof will be described below. In Figs. 4 and 5, in the paint mist recovery apparatus 10 according to the embodiment, the cyclone separators 30 are provided in the housing 20, and the opening 21 for sucking the untreated air containing the paint mist 12 is provided in the housing 20 (Fig. 4(A) and Fig. 5).

The air containing the paint mist 12 sucked into the housing 20 from the opening 21 flows into the cyclone separator 30 from the suction port 31 (Fig. 4(B) and Fig. 5), and a swirling flow is generated in the outer cylinder 32 (Fig. 4(C) and Fig. 5). The paint mist 12 moves toward a wall surface of the outer cylinder 32 by a centrifugal force of the swirling flow and comes into contact with the wall surface. At this time, the paint mist 12 having no viscosity does not adhere to the wall surface of the cyclone separator 30, but moves to a downstream side (vertically downward) of the swirling flow, and is recovered in the recovery box 40. Consequently, the recovery efficiency of the paint mist having no viscosity can be enhanced.

As illustrated in Figs. 4(D) and 5, the air from which the paint mist 12 has been separated is discharged upward through the exhaust pipe 33 at a center of the cyclone separator 30, passes through the gap 26 between the housing 20 and the cyclone separators 30, and is discharged as cleaned air from the exhaust port 24 to the outside of the housing 20.

In a case in which the material of the paint mist recovery apparatus 10 is iron or another incombustible material, the paint mist recovery apparatus 10 can be reused. The paint mist recovery apparatus 10 can be used semi-permanently by periodically disposing the paint mist 12 recovered in the recovery box 40.

The paint mist recovery apparatus 10 can be manufactured according to a particle size of the paint mist 12 by adjusting a diameter of the outer cylinder 32 of the cyclone separator 30. In particular, the paint mist 12 having a particle size of 10 µm or less can be recovered.

### [Embodiment 2]

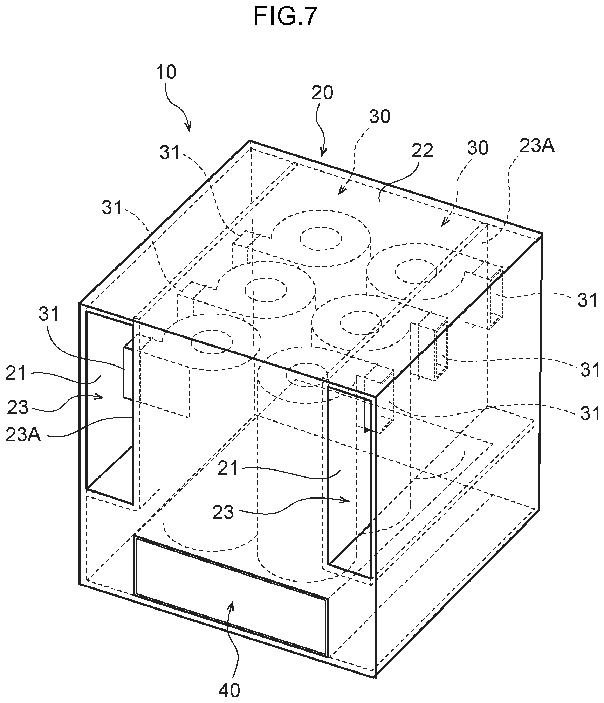

As illustrated in Fig. 7, in Embodiment 2, the opening 21 is provided in a side surface of the housing 20. That is, the opening 21 may be provided in an upper portion of the housing 20 or the side surface of the housing 20. According to the embodiment, it is possible to cope with a different device layout in a coating apparatus or a paint mist recovery apparatus.

### [Embodiment 3]

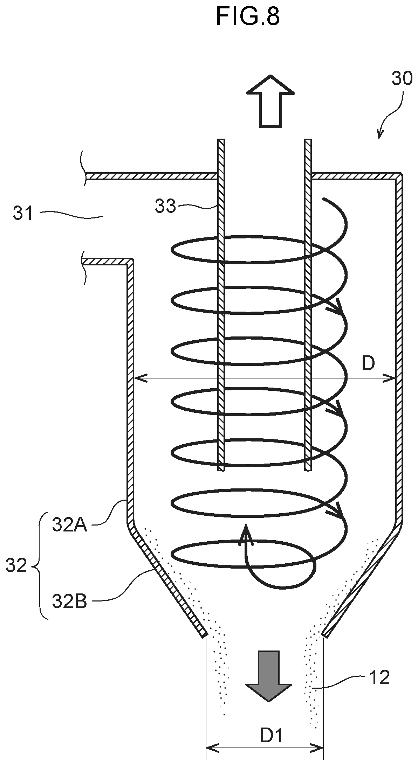

As illustrated in Fig. 8, in Embodiment 3, a lower portion of the outer cylinder 32 has a conical shape with a diameter decreasing downward. In other words, the outer cylinder 32 has a cylindrical portion 32A on an upper side and a conical portion 32B on a lower side. The lower end of the outer cylinder 32 is open to drop the paint mist 12 into the recovery box 40.

Dimensions of a configuration in a case in which the lower portion of the outer cylinder 32 has the conical shape are described. When an inner diameter of the cylindrical portion 32A of the outer cylinder 32 is represented by D, and an inner diameter of the lower end of the outer cylinder 32 (the thinnest inner diameter area of a distal end portion of the conical portion 32B) is represented by D1, D1 ≈ from 0.8d to D. A swirling speed of air in the outer cylinder 32 can be increased by reducing the inner diameter D1, and the effect of centrifugal separation can be enhanced. In a case in which D1 = D, the outer cylinder 32 has no conical portion as in Embodiment 1.

### [Embodiment 4]

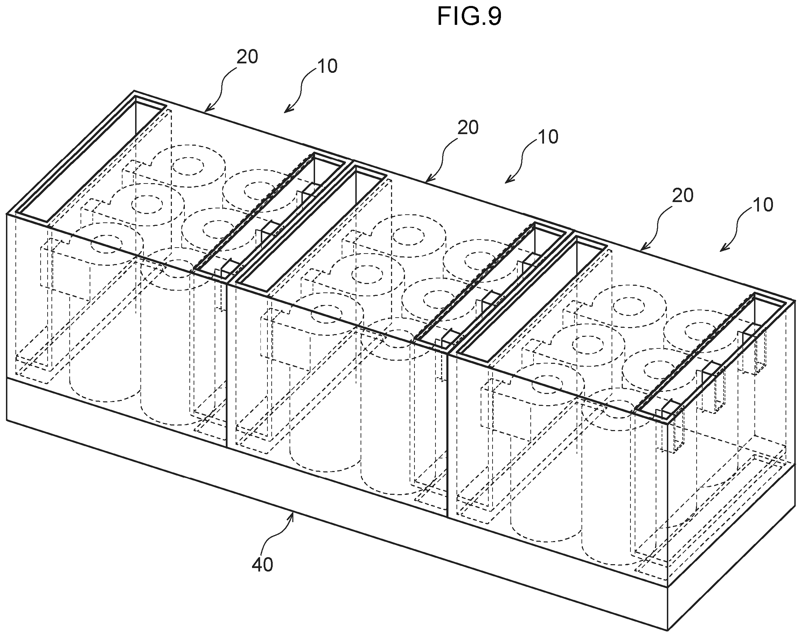

As illustrated in Fig. 9, in Embodiment 4, the paint mist 12 separated in a plurality of housings 20 is recovered in one recovery box 40. Specifically, in the embodiment, one recovery box 40 is provided below the three housings 20 aligned in a row. That is, the paint mist 12 can be recovered from a larger number of cyclone separators 30, and the number of operations in the case of disposing the paint mist 12 can be reduced.

### [Paint Mist Recovery Method]

A paint mist recovery method includes: a step of introducing untreated air containing paint mist into a housing; a step of introducing the untreated air into cyclone separators and generating a swirl flow; a step of separating paint mist by a centrifugal force and introducing the paint mist to a recovery box; and a step of discharging cleaned air through a gap formed between the housing and the cyclone separators to a lower surface or a side surface of the housing.

### [Other Embodiments]

Although one example of the embodiment of the disclosure has been described above, the embodiments of the disclosure are not limited to the above description, and it is needless to say that, in addition to the above-described examples, various modifications can be made without departing from the gist of the disclosure.

The outer cylinder 32 is not limited to a circular cylinder, and may have a polygonal shape with four or more sides (not illustrated).

The exhaust port 24 of the housing 20 may be formed not only in the lower surface of the housing 20 but also in the side surface of the housing 20.

The recovery box 40 may be detachable from the housing 20 by disassembling the housing 20. An upper portion of the recovery box 40 is not limited to a configuration in which the upper portion is open at areas of the holes 40A, and may be open at least at areas corresponding to the outer cylinders 32. Hence, the upper portion of the recovery box 40 may be entirely open.

## Claims

1. A paint mist recovery apparatus, comprising:
a housing having an opening through which untreated air containing paint mist is introduced;
cyclone separators that separate the paint mist from the untreated air and that are provided in the housing; and
a recovery box that recovers the paint mist separated by the cyclone separators and that communicates with the cyclone separators,
wherein air cleaned by the cyclone separators passes through a gap between the housing and the cyclone separators and is exhausted through a lower surface of the housing or a side surface of the housing.

2. The paint mist recovery apparatus according to claim 1, wherein the paint mist recovery apparatus is made of only cardboard, only an incombustible material, or any combination of cardboard and an incombustible material.

3. The paint mist recovery apparatus according to claim 1, wherein the opening is provided in an upper portion of the housing or a side surface of the housing.

4. The paint mist recovery apparatus according to claim 1, wherein outer cylinders of the cyclone separators have a cylindrical shape or a cylindrical shape and a conical shape.

5. The paint mist recovery apparatus according to claim 4, wherein:
a suction space is formed under the opening inside the housing, and
the gap is also formed between the adjacent outer cylinders and between the outer cylinders and an inner wall of the suction space.

6. The paint mist recovery apparatus according to claim 1, wherein outer cylinders of the cyclone separators have a polygonal shape with four or more sides.

7. The paint mist recovery apparatus according to claim 1, wherein each of the cyclone separators has an exhaust pipe at an inner side of an outer cylinder.

8. The paint mist recovery apparatus according to claim 6, wherein the exhaust pipe is open in the gap between a top surface of the housing and the cyclone separators.

9. The paint mist recovery apparatus according to claim 1, wherein the recovery box is configured to be drawn from the housing.

10. The paint mist recovery apparatus according to claim 1, wherein paint mist separated in a plurality of housings is recovered in the one recovery box.

11. The paint mist recovery apparatus according to claim 1, wherein:
a flow speed at a suction port of each of the cyclone separators is from 8 to 12 m/s,
when a height dimension of the suction port is represented by h, and a width dimension of the suction port is represented by w, an inner diameter d of an exhaust pipe of each of the cyclone separators is obtained from (h × w)^{1/2},
when an inner diameter of an outer cylinder of each of the cyclone separators is represented by D, D = from 2d to 2.5d,
when a length of the outer cylinder is represented by L, L = from 3D to 4D, and
when an inner diameter of a lower end of the outer cylinder is represented by D1, D1 = from 0.8d to D.

12. A paint mist recovery method, comprising:
introducing untreated air containing paint mist into a housing;
introducing the untreated air into cyclone separators and generating a swirl flow;
separating paint mist by a centrifugal force and introducing the paint mist to a recovery box; and
discharging cleaned air through a gap formed between the housing and the cyclone separators to a lower surface of the housing or a side surface of the housing.
